# EUROPÄISCHE PATENTANMELDUNG

(11) **EP 2 037 659 A2**
(43) Veröffentlichungstag der Anmeldung: **18.03.2009**
(21) Anmeldenummer: 08013236.8
(22) Anmeldetag: 23.07.2008
(51) Int. Cl.: H04L 29/12

(54) **Verfahren zur DHCP Server-Konfiguration unter Verwendung von DHCP Option 82**

(30) Priorität: 04.08.2007 DE 102007036962
(71) Anmelder: Hirschmann Automation and Control GmbH, 72654 Neckartenzlingen (DE)
(72) Erfinder: Wacker, Michael, 72827 Wannweil (DE); Rentschler, Markus, 72581 Dettingen (DE); Mohl, Dirk, 73733 Esslingen (DE); Kleineberg, Oliver, 73240 Wendlingen (DE)
(74) Vertreter: Thul, Hermann

(57) **Zusammenfassung**

Die Erfindung betrifft ein Verfahren für die Erstellung einer DHCP-Netzwerkgerätekonfiguration, bei der die Parametervergabe von einem DHCP-Server über Option 82 erfolgt und die Zuordnung für die einem Netzwerkgerät zu vergebende IP-Adresse anhand der Topologieinformationen ermittelt wird, wobei die Topologieinformationen dem DHCP-Server von dem anfordernden Gerät und einem DHCP-Relay-Agenten zur Verfügung gestellt werden, wobei der DHCP-Relay-Agent jede von einem Gerät im Netzwerk versendete DHCP-Nachricht mit einer zusätzlichen DHCP-Option 82 beaufschlagt und die Nachrichten per Unicast weiter an den DHCP-Server versendet, während die normale DHCP-Nachricht weitervermittelt wird, wobei erfindungsgemäß vorgesehen ist, dass ein Netzwerkgerät zusätzlich zu den regulären DHCP-Discovers über MAC-Broadcast DHCP-Nachrichten über MAC-Multicast an eine MAC-Multicastadresse versendet und das aus diesem MAC Multicast durch einen DHCP Relay Agenten eindeutige Informationen per Unicast an den DHCP Server gesendet werden, da das zugehörige Infrastrukturgerät den Multicast abfiltert und dass die Erstellung einer DHCP Serverkonfiguration automatisiert mittels einer Softwarekomponente für das Netzwerkmanagement erfolgt.

## Beschreibung

Die Erfindung betrifft ein Verfahren für die Erstellung einer DHCP-Netzwerkgerätekonfiguration gemäß den Merkmalen des Oberbegriffes des Patentanspruches 1.

Stand der Technik ist die topologieabhängige Vergabe von Parametern über DHCP Option 82. DHCP bedeutet "Dynamic Host Configuration Protocol" und ist an sich bekannt.

Fällt in einem vollständig für DHCP Option 82 konfigurierten Netzwerk ein Infrastrukturgerät aus, muss es lediglich durch ein identisches Gerät ersetzt werden. Eine weitere Konfiguration ist nicht notwendig. Da sich die Topologie des Netzwerkes und somit die Topologieinformationen nicht geändert haben, wird das Ersatzgerät die gleiche IP-Adresse und die gleichen Parameter über DHCP Option 82 erhalten wie das defekte Vorgängergerät.

Die Vergabe von IP-Parametern über DHCP Option 82 unterscheidet sich grundlegend von der traditionellen Vorgehensweise, in der der DHCP-Server eine feste Zuordnung zwischen einem physikalischen, gerätebezogen einzigartigen Attribut (zum Beispiel einer MAC (Media Access Control) Adresse) und einer zu vergebenden IP-Adresse für das entsprechende Gerät herstellt.

Anstatt die zu vergebende IP-Adresse an ein festes, gerätebezogenes Attribut (wie zum Beispiel die MAC-Adresse) zu binden, wird bei der Parametervergabe über Option 82 die Zuordnung für die zu vergebende IP-Adresse anhand der Topologieinformationen ermittelt, die dem DHCP-Server von dem anfordernden Gerät und einem DHCP-Relay-Agenten zur Verfügung gestellt werden.

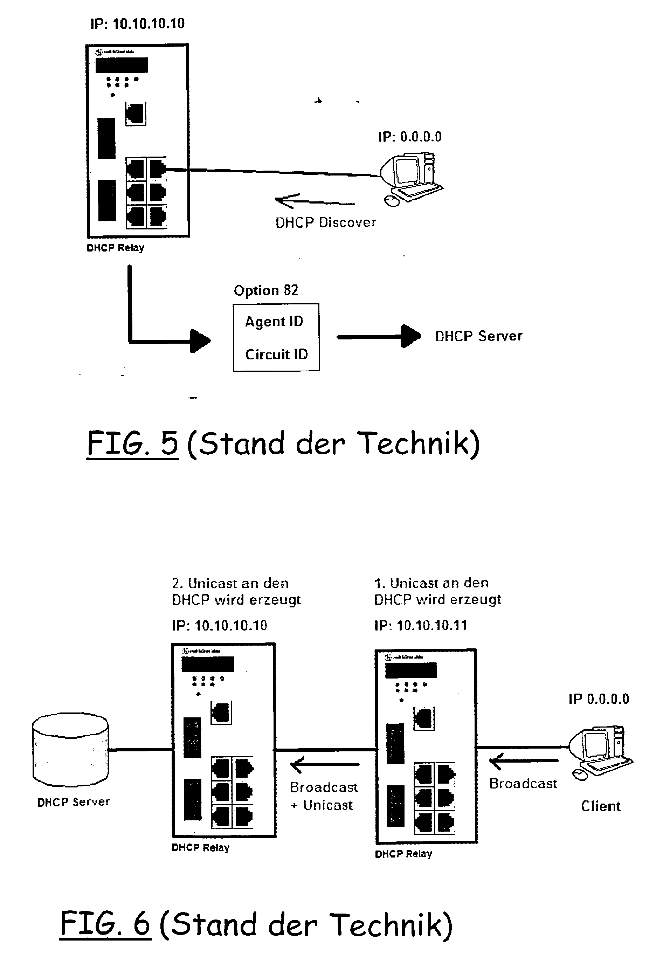

Der DHCP-Relay-Agent ist eine Softwarekomponente, die auf den in der Netzwerktopologie vorhandenen Infrastrukturgeräten vorhanden ist und aktiviert sein muss. Der Relay-Agent beaufschlagt jede von einem Gerät im Netzwerk versendete DHCP Nachricht mit einer zusätzlichen DHCP-Option, der Option 82, und versendet die Nachrichten per Unicast weiter an den DHCP-Server, während die normale DHCP-Nachricht wie üblich weitervermittelt wird. (beispielsweise ein DHCP-Discover per Broadcast, siehe auch Figur 5).

Somit ergeben sich für die Parametervergabe lediglich Zuordnungen basierend auf übermittelten Topologieinformationen. Die bei einem Gerät einzigartigen physikalischen Eigenschaften (zum Beispiel MAC-Adresse) sind für die Parametervergabe nicht mehr relevant.

Die Programmierung von Netzwerkgeräten wie zum Beispiel Ethernetswitchen bzw. die Funktionalitäten, die von den verwendeten Chipsätzen hardwareseitig zur Verfügung gestellt werden, lassen bei den meisten Ethernetswitchen ein Filtern von MAC-Broadcasts nicht zu.

Standardmäßig wird zum Beispiel ein Ethernetswitch einen auf einem Port empfangenen Broadcast auf allen Switchports (außer dem Port, auf dem der Broadcast empfangen wurde) ausgeben. Dies führt dazu, dass bei der IP-Vergabe über DHCP Option 82 mit Relay-Agenten Mehrdeutigkeiten bei der Adressvergabe entstehen können (siehe Figur 6)

In diesem Fall (Figur 6) erzeugt der Client eine DHCP-Nachricht, die am ersten Relay empfangen wird. Hier wird der Broadcast zum Einen weitergeleitet und zum Anderen mit der Option 82 und seiner spezifischen Agent-ID und Circuit-ID beaufschlagt und als Unicast an den DHCP-Server versendet. Der weitergeleitete Broadcast erreicht nun ein weiteres Netzwerkgerät mit aktiviertem DHCP-Relay. Auch hier wird der Agent den Broadcast auswerten und einen Unicast mit Option 82 und seiner spezifischen Agent-ID und Circuit-ID an den DHCP-Server schicken.

Der erste und der zweite Unicast kommen nun beide beim DHCP-Server an. Damit existieren für ein und dasselbe Gerät zwei verschiedene Anfragen. Der DHCP-Server kann nur aus den reinen weitergeleiteten DHCP-Nachrichten nicht eine spezifische Anfrage als die korrekte Anfrage identifizieren: Somit ist keine eindeutige Zuordnung und IP-Adressvergabe möglich. Weiterhin kann eine fehlerhafte Vergabe von IP-Adressen eintreten, wenn in einem Ast eines Topologiebaums mehrere Geräte und/oder Clients angeordnet sind, und verschiedene DHCP-Nachrichten als Broadcasts auf der gleichen Schnittstelle eines Infrastrukturgerätes mit aktiviertem DHCP Relay Agenten eintreffen: Das Infrastrukturgerät wird für jeden Broadcast einen Unicast an den DHCP Server erzeugen, jeweils mit identischer Agent-ID und Circuit-ID. Hier kann ebenfalls nicht zweifelsfrei entschieden werden, welchem anfragenden Gerät/Client die IP Adresse zugeordnet werden soll.

Der Erfindung liegt daher die Aufgabe zugrunde, die Automatisierung der Konfigurationsabläufe zur Erstellung eines konfigurierten Netzwerkes zu ermöglichen und zu verbessern sowie eine eindeutige Zuordnung und IP-Adressvergabe zu ermöglichen.

Diese Aufgabe ist durch die Merkmale des Patentanspruches 1 gelöst.

Erfindungsgemäß ist vorgesehen, dass ein Netzwerkgerät zusätzlich zu den regulären DHCP-Discovers über MAC-Broadcast DHCP-Nachrichten über MAC-Multicast an eine MAC-Multicastadresse versendet und dass aus diesem MAC-Multicast durch den DHCP-Relay-Agenten eindeutige Informationen per Unicast an den DHCP-Server gesendet werden, wobei das zugehörige Netzwerkgerät den Multicast abfiltert.

Im Nachfolgenden werden Geräte, die für den Betrieb des Netzwerks, beispielsweise als (zentrale) Vermittlungseinheit, notwendig sind, als "Geräte", "Netzwerkgeräte" oder "Infrastrukturgeräte" bezeichnet. Beispielhaft für (Infrastruktur)Geräte wären Ethernetswitche oder Router. Geräte, die nicht als aktive Komponenten für den Netzbetrieb notwendig sind, sondern das zur Verfügung gestellte Netz für den Produktivbetrieb nutzen, werden nachfolgend als "Clients" bezeichnet. Beispielhaft für Clients wären Notebooks, Personal Computer oder die Steuerungseinheiten von Maschinen mit Ethernetschnittstellen.

### Lösung für Netzwerkgeräte (Infrastrukturgeräte innerhalb des Netzwerkes):

Die Netzwerkgeräte (Infrastrukturgeräte wie zum Beispiel Switche oder dergleichen) versenden zusätzlich zu den regulären DHCP-Discovers über MAC-Broadcast DHCP-Nachrichten über MAC-Multicast an eine MAC-Multicastadresse. Multicast-Rahmen werden üblicherweise von Ethernetswitchen behandelt wie Broadcastrahmen: Die Switche leiten sie über alle Schnittstellen (außer der Empfangsschnittstelle) weiter. Ein Multicast-Rahmen an eine spezielle Multicastadresse wird allerdings von einem besonders dafür modifizierten Infrastrukturgerät nicht weitergeleitet, sondern abgefiltert.

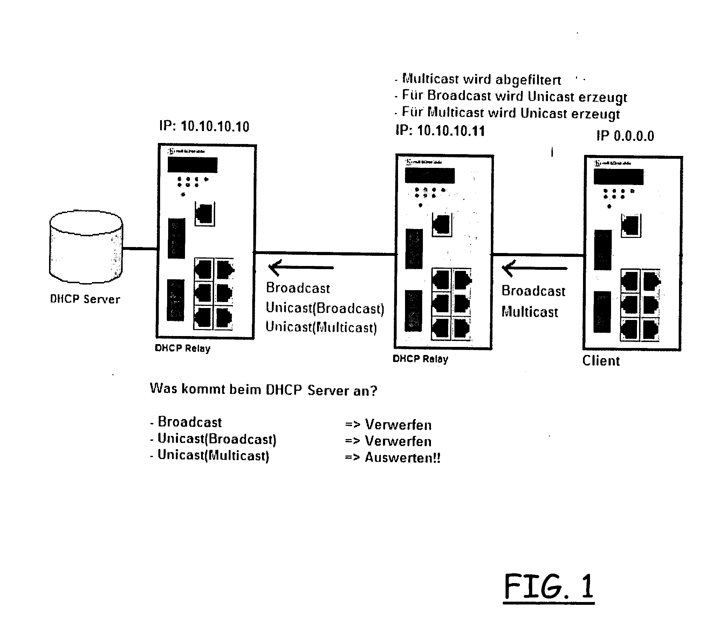

Gleichzeitig wird der auf diesem Gerät arbeitende Relay-Agent aus dem Multicast einen weiteren Unicast erzeugen und an den DHCP-Server versenden. In der DHCP-Serverkonfiguration wird für das anfordernde Gerät nur ein Eintrag basierend auf dem über den Agent weitergeleiteten eingehenden Multicast erzeugt, während der DHCP-Server nicht auf eingehende Broadcasts oder Unicasts, basierend auf diesen Broadcasts, reagiert. Nur der eingehende aus dem Multicast erzeugte Unicast ist eindeutig zuzuordnen und somit für die IP Adressvergabe verwendbar (siehe Figur 1).

Weiterhin verhindert der Relay-Agent ein Erzeugen des Unicast aus dem Broadcast, der am DHCP-Server ohnehin verworfen wird, wodurch sich die Netzlast reduzieren lässt. Ob dieser Unicast, basierend auf dem Broadcast, generiert werden soll oder nicht, muss in der Agentkonfiguration auf den Infrastrukturgeräten angegeben werden und an- und abschaltbar sein.

### Lösung für Clients:

Anders als bei Infrastrukturgeräten kann bei Clients nicht von einem erzeugten Multicast-Rahmen ausgegangen werden. Bei Clients stehen mit hoher Wahrscheinlichkeit nur DHCP-Nachrichten über MAC-Broadcast zur Verfügung.

Um in einer solchen Situation eine Eindeutigkeit herzustellen, muss sichergestellt sein, dass Clients nur als letztes Gerät in einem Ast eines Topologiebaums eingesetzt werden. Ferner muss an allen Ports aller Infrastrukturgeräte, an die Clients angeschlossen sind, die oben besprochene Verhinderung der Erzeugung der Unicasts aus Broadcasts abgeschaltet werden.

An dem DHCP-Server wird dann für diesen Client der vom ersten DHCP-Relay erzeugte Unicast mit Option 82 aus dem Broadcast ausgewertet.

Die manuelle Ermittlung der Parameter Agent-ID und Circuit-ID und damit die korrekte Erstellung eines Konfigurationseintrages ist für einen Endbenutzer nur unter hohem administrativem Aufwand für jeden einzelnen Eintrag und mit Hilfe von Dokumentationen beherrschbar und zudem sehr fehleranfällig. Um dieses System mit vertretbarem Aufwand nutzbar zu gestalten, müssen die Prozesse zur Erstellung des Eintrages, insbesondere die Ermittlung von Agent-ID und Circuit-ID, so weit wie möglich automatisiert werden.

Ziel der automatisierten Erstellung der Serverkonfiguration ist es also, das konfigurationsfreie Ersetzen fehlerhafter Geräte mittels DHCP Option 82 zu ermöglichen, ohne dass der Benutzer eine komplette Konfiguration für den DHCP-Server manuell erstellen muss.

Daher stellt die Erfindung auch ein Verfahren zum Auslesen bestehender Informationen und zum automatischen Erstellen der Konfiguration bereit.

Ferner ist zu berücksichtigen, dass bei einer Neuinstallation einer, die Automatisierung unterstützenden Managementsoftware bereits ein teilweise oder vollständig mit IP-Adressen konfiguriertes Netzwerk vorhanden sein kann. Diese Umgebungsparameter müssen ausgewertet werden und eine unterstützende Softwarekomponente muss diese bei der Erstellung der DHCP Konfiguration berücksichtigen.

Um den Konfigurationsaufwand für den Einsatz eines solchen Systems in einer Netzwerkumgebung niedrig zu halten, kann das Managementsystem die für die Erstellung von Einträgen für die DHCP-Konfiguration relevanten Informationen aus den bereits mit IP-Adressen versehenen Geräten erhalten.

Hierzu werden mittels einer Softwarekomponente (die als Computerprogrammprodukt auf einem Rechner läuft) für das Netzwerkmanagement (zum Beispiel Industrial HiVision der Anmelderin) die bereits mit einer IP-Adresse versehen Geräte ermittelt.

Nachfolgend wird über eine Managementschnittstelle, beispielsweise das SNMP (Simple Network Management Protocol), auf die Infrastrukturgeräte zugegriffen und die für den Eintrag in der DHCP Konfiguration notwendigen Parameter ermittelt, so unter Anderem die Agent-IDs und Circuit-IDs.

Anschließend kann die Managementsoftware, basierend auf den ausgelesenen Informationen, die DHCP-Konfiguration für die Geräte erstellen und dem DHCP-Server zur Verfügung stellen. Sobald die neu erstellten Konfiguration und der DHCP-Server verfügbar und aktiv sind, ist das konfigurationsfreie Ersetzen fehlerhafter Geräte möglich.

Weiterhin wird ein Verfahren der selbsttragenden Nachbarkonfiguration für die Vergabe von Parametern mittels DHCP Option 82 beansprucht.

Die selbsttragende Nachbarkonfiguration sorgt dafür, dass neue Infrastrukturgeräte automatisch in das bestehende Netzwerk integriert werden bzw. dass ein komplett neu erstelltes Netzwerk für Option 82 IP Vergabe konfiguriert wird, ohne den Benutzer mit der dafür notwendigen komplexen Ermittlung der notwendigen Parameter zu konfrontieren.

Vorausgesetzt wird mindestens ein dem DHCP-Server vorgeschaltetes erstes Infrastrukturgerät mit konfiguriertem und aktiviertem DHCP-Relay-Agent, das vor Beginn der Nachbarkonfiguration manuell eingerichtet werden muss.

Der Benutzer muss für die Konfiguration lediglich die IP-Adresse(n) zur Verfügung stellen, entweder fest einem Gerät zugeordnet oder als Pool (Liste), aus dem die Adressen für die verschiedenen Infrastrukturgeräte ausgewählt werden.

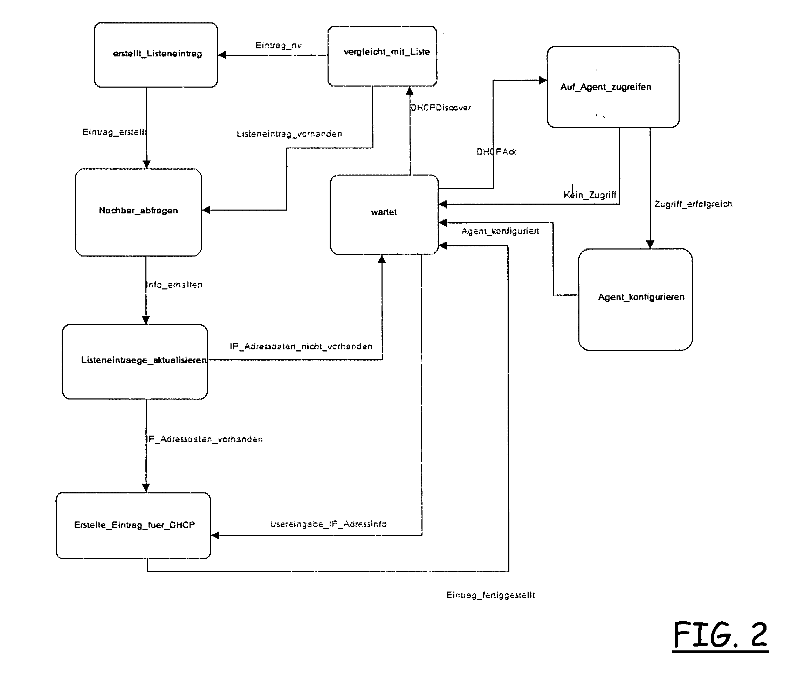

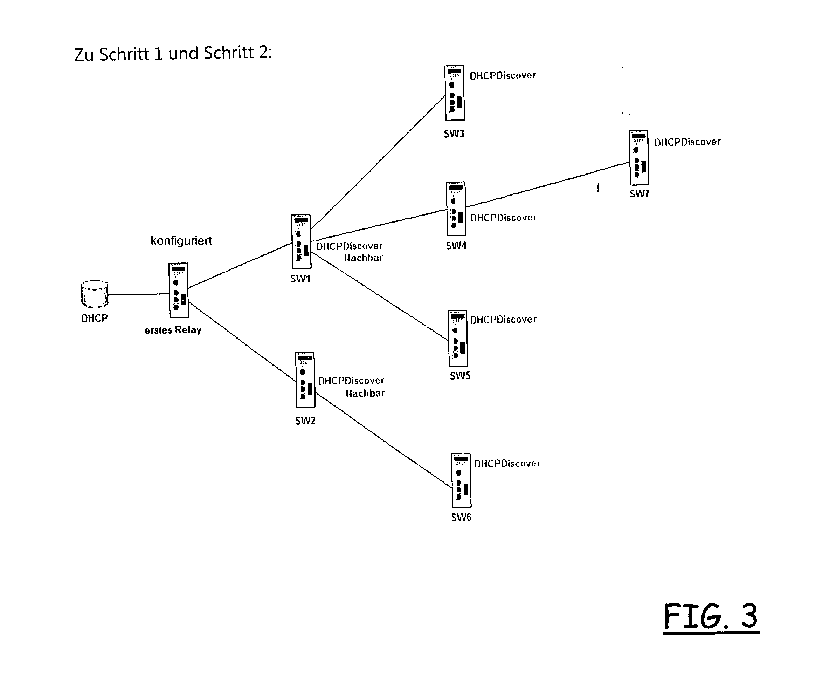

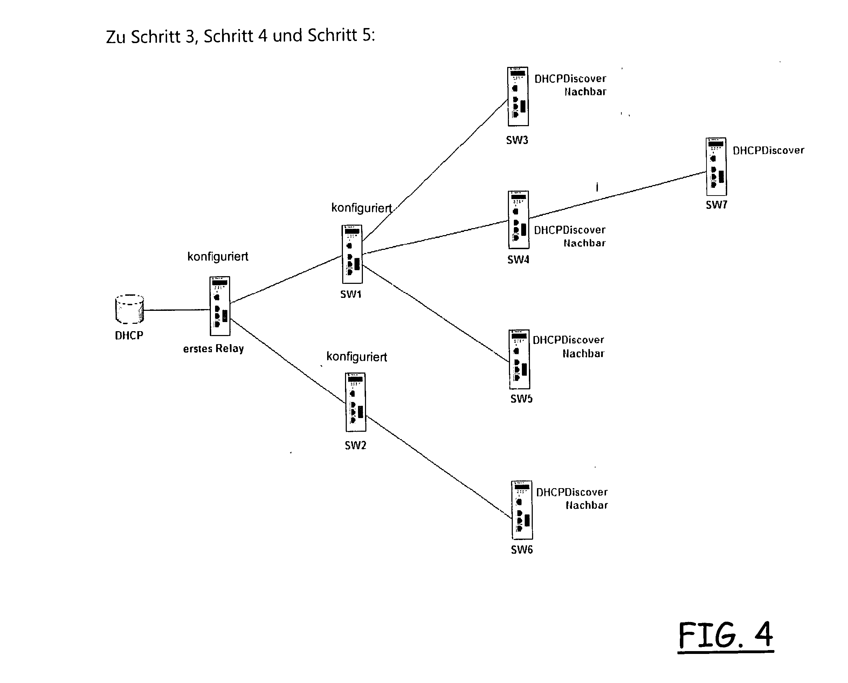

Der Ablauf in einzelnen Schritten (siehe auch Figur 2) ist folgender:
1. Jedes neue Gerät, das sich als Neugerät im Netzwerk meldet (zum Beispiel durch einen DHCP-Discover), wird von der Managementsoftware in eine Liste für die zu konfigurierenden Geräte eingetragen (siehe auch Figur 3, Markierung "DHCP-Discover"),
2. Mittels Abfragen über eine Managementschnittstelle (zum Beispiel SNMP) der über ein Discovery-Protokoll (zum Beispiel LLDP (Link Layer Discovery Protocol)) auf dem Relay verfügbaren Nachbarinformationen werden die direkt an diesem Relay angeschlossenen Nachbarn identifiziert. Diese Nachbarn werden in der Geräteliste der zu konfigurierenden Geräte markiert (siehe auch Figur 3, Markierungen "Nachbar" an SW1 und SW2),
3. Für die identifizierten Nachbarn werden Einträge für die DHCP-Konfiguration erstellt, basierend auf den Informationen, die vom Agent über die Managementschnittstelle ausgelesen werden können (zum Beispiel Agent-ID und Circuit-ID). Sobald Informationen für die IP-Adresse vorliegen, die den jeweiligen Geräten zugeteilt werden soll, wird der Eintrag komplettiert, aktiviert und der DHCP-Server vergibt eine IP-Adresse,
4. Auf jedem neu mit einer IP-Adresse konfigurierten Gerät (in Figur 4 an SW1 und SW2) wird der DHCP-Relay-Agent aktiviert und konfiguriert, sofern es ein Infrastrukturgerät ist und über die entsprechende Softwarekomponente verfügt,
5. Auf jedem neu konfigurierten Relay beginnt der Prozess wieder bei Schritt 1, bis alle unkonfigurierten Geräte erkannt und Einträge erstellt wurden.

Weiterhin muss sichergestellt werden, dass in einem vermaschten Netz oder einer Ringtopologie alle möglichen Konfigurationseinträge für ein Gerät erfasst werden, wenn redundante Pfade zur Verfügung stehen. Dies kann dadurch erreicht werden, dass nach Erfassen aller Netzwerkteilnehmer nochmals alle Infrastrukturgeräte über die Managementschnittstelle auf Einträge geprüft werden, die durch die Nachbarkonfiguration nicht erfasst wurden.

Ein beispielhaftes Anwendungszenario ist eine Produktionshalle mit mehreren Maschinen, die über ein Industrial-Ethernet-Netzwerk und die dazugehörigen Infrastrukturgeräte mit Steuerungsinformationen versorgt werden. Fällt beispielsweise während der Nachtschicht ein Infrastrukturgerät mit einem Defekt aus, so muss das defekte Gerät schnellstmöglich ersetzt werden, um einen längeren kostspieligen Produktionsausfall zu verhindern. Dies muss unter Umständen durch einen Mitarbeiter der Nachtschicht durchgeführt werden. Ist die Konfiguration der Infrastrukturgeräte mittels DHCP Option 82 realisiert, so muss der Mitarbeiter lediglich den defekten Switch aus der Topologie entfernen und durch ein identisches, unkonfiguriertes Neugerät ersetzen. Alle weiteren notwendigen ersten Schritte auf Netzwerkmanagementebene, wie die IP-Vergabe und die Übergabe von DHCP-Optionen zur Konfiguration, werden durch den DHCP Server übernommen. Der Mitarbeiter, der den Gerätetausch vornimmt, benötigt keinerlei Zugriff auf die Managementsysteme des Netzwerks und auch keine weitergehende Ausbildung. Wird die IP-Vergabe und Konfiguration hingegen nicht mittels DHCP Option 82 durchgeführt, so benötigt der Mitarbeiter für die Änderungen in der Topologie und auf Netzwerkmanagementebene eine entsprechende Ausbildung und Zugriff auf die für den Tausch relevanten Schnittstellen wie z.B. manuelle DHCP Serverkonfiguration um die durch den Gerätetausch veränderten Parameter, evtl. zusätzlich sehr zeitaufwändig, zu aktualisieren.

## Patentansprüche

1. Verfahren für die Erstellung einer DHCP-Netzwerkgerätekonfiguration, bei der die Parametervergabe von einem DHCP-Server über Option 82 erfolgt und die Zuordnung für die einem Netzwerkgerät zu vergebende IP-Adresse anhand der Topologieinformationen ermittelt wird, wobei die Topologieinformationen dem DHCP-Server von dem anfordernden Gerät und einem DHCP-Relay-Agenten zur Verfügung gestellt werden, wobei der DHCP-Relay-Agent jede von einem Gerät im Netzwerk versendete DHCP-Nachricht mit einer zusätzlichen DHCP-Option 82 beaufschlagt und die Nachrichten per Unicast weiter an den DHCP-Server versendet, während die normale DHCP-Nachricht weitervermittelt wird, **dadurch gekennzeichnet, dass** ein Netzwerkgerät zusätzlich zu den regulären DHCP-Discovers über MAC-Broadcast DHCP-Nachrichten über MAC-Multicast an eine MAC-Multicastadresse versendet und dass aus diesem MAC-Multicast durch den DHCP-Relay-Agenten eindeutige Informationen per Unicast an den DHCP-Server gesendet werden, wobei das zugehörige Netzwerkgerät den Multicast abfiltert.

2. Verfahren nach Anspruch 1, **dadurch gekennzeichnet, dass** das Netzwerkgerät ein Endgerät ist und das Endgerät als letztes Gerät in einem Ast eines Topologiebaums eingesetzt wird, wobei weiterhin an allen Ports aller Netzwerkgeräte, an die Endgeräte angeschlossen sind, die Verhinderung der Erzeugung der Unicasts aus Broadcasts abgeschaltet wird und an dem DHCP-Server für dieses Gerät der vom ersten DHCP-Relay erzeugte Unicast mit Option 82 aus dem Broadcast ausgewertet wird.

3. Verfahren nach Anspruch 1 oder 2, **dadurch gekennzeichnet, dass** die für die Erstellung von Einträgen für die DHCP-Konfiguration relevanten Informationen aus den bereits mit IP-Adressen versehenen Netzwerkgeräten ausgelesen werden.

4. Verfahren nach Anspruch 1, **dadurch gekennzeichnet, dass** mittels einer Softwarekomponente für das Netzwerkmanagement die bereits mit einer IP-Adresse versehen Netzwerkgeräte ermittelt werden, nachfolgend über eine Managementschnittstelle auf die Netzwerkgeräte zugegriffen wird und die für den Eintrag in der DHCP-Konfiguration notwendigen Parameter ermittelt werden und anschließend von der Managementsoftware, basierend auf den ausgelesenen Informationen, die DHCP-Konfiguration für die Geräte erstellt und dem DHCP-Server zur Verfügung gestellt wird.

5. Verfahren nach Anspruch 4, **dadurch gekennzeichnet, dass** die Managementschnittstelle das SNMP (Simple Network Management Protocol) ist.

6. Verfahren nach einem der vorhergehenden Ansprüche, **dadurch gekennzeichnet, dass** dem DHCP-Server ein erstes Netzwerkgerät mit konfiguriertem und aktiviertem DHCP-Relay-Agent, der vor Beginn einer Nachbarkonfiguration manuell eingerichtet worden ist, vorgeschaltet ist und ein Benutzer für die Konfiguration die IP-Adresse(n) zur Verfügung stellt.

7. Verfahren nach einem der vorhergehenden Ansprüche, **dadurch gekennzeichnet dass** die Erstellung der DHCP-Serverkonfiguration durch eine Softwarekomponente für das Netzwerkmanagement schrittweise nach folgendem Schema erfolgt:
• Jedes neue Gerät, das sich als Neugerät im Netzwerk meldet (zum Beispiel durch einen DHCP-Discover) wird von der Managementsoftware in eine Liste für die zu konfigurierenden Geräte eingetragen,
• Mittels Abfragen über eine Managementschnittstelle der über ein Discovery-Protokoll auf dem Relay verfügbaren Nachbarinformationen werden die direkt an diesem Relay angeschlossenen Nachbarn identifiziert, wobei diese Nachbarn in der Geräteliste der zu konfigurierenden Geräte markiert werden,
• Für die identifizierten Nachbarn werden Einträge für die DHCP-Konfiguration erstellt, basierend auf den Informationen, die vom Agent über die Managementschnittstelle ausgelesen werden und, sobald diese Informationen für die IP-Adresse vorliegen, die den jeweiligen Geräten zugeteilt werden soll, der Eintrag komplettiert und aktiviert wird und der DHCP-Server eine IP-Adresse vergibt,
• Auf jedem neu mit einer IP-Adresse konfigurierten Gerät wird der DHCP-Relay-Agent aktiviert und konfiguriert, sofern es ein Infrastrukturgerät ist und über die entsprechende Softwarekomponente verfügt,
• Auf jedem neu konfigurierten Relay beginnt der Prozess wieder beim ersten Schritt, bis alle unkonfigurierten Geräte erkannt und Einträge erstellt wurden.

8. Verfahren nach Anspruch 6, **dadurch gekennzeichnet, dass** die zumindest eine IP-Adresse entweder fest einem Netzwerkgerät zugeordnet ist oder in einem Pool vorhanden ist, aus dem die IP-Adressen für die verschiedenen Netzwerkgeräte ausgewählt werden.
